# EUROPÄISCHE PATENTSCHRIFT

(11) **EP 1 902 805 B1**
(45) Veröffentlichungstag und Bekanntmachung des Hinweises auf die Patenterteilung: **09.03.2011**
(21) Anmeldenummer: 07014752.5
(22) Anmeldetag: 27.07.2007
(51) Int. Cl.: B23G 5/06

(54) **Werkzeug für die Bearbeitung eines Werkstücks**
Tool for machining a workpiece
Outil pour le traitement d'une pièce à usiner

(30) Priorität: 19.09.2006 DE 102006044575
(43) Veröffentlichungstag der Anmeldung: 26.03.2008
(73) Patentinhaber: EMUGE-Werk Richard Glimpel GmbH & Co.KG Fabrik für Präzisionswerkzeuge, 91207 Lauf (DE)
(72) Erfinder: Glimpel, Helmut, 91207 Lauf (DE); Hechtle, Dietmar, 91257 Pegnitz (DE)
(74) Vertreter: Schröer, Gernot H.

(56) Entgegenhaltungen:
- DE-A1- 2 331 927
- DE-C- 416 709
- DE-U1- 8 324 835
- FR-A1- 2 350 163
- FR-A1- 2 701 226
- GB-A- 1 090 875
- JP-A- 2001 353 623
- RU-C1- 2 021 085
- US-A- 2 202 236

## Beschreibung

Die Erfindung betrifft ein Werkzeug für die Bearbeitung eines Werkstücks gemäß dem Oberbegriff des Anspruchs 1. Der Werkzeugkopf weist wenigstens eine Schneide, wenigstens einen Schälanschnitt und wenigstens eine Spannut auf.

Bei einem derartigen Werkzeug kann es sich beispielsweise um einen Gewindebohrer handeln, wie er in der DE 416 709 beschrieben ist.

Derartige Gewindebohrer mit einem Schälanschnitt sind besonders geeignet zum Gewindeschneiden in Durchgangsbohrungen. Dabei werden die Späne in Schnittrichtung ausgebracht, so dass diese aus dem Bohrloch fallen und den Schnittprozess nicht durch einen Spanstau hindern.

Der Erfindung liegt die Aufgabe zugrunde, ein Werkzeug der eingangs genannten Art derart anzugeben, dass die Schnittleistung des Werkzeugs möglichst gut ist.

Nach der Erfindung wird diese Aufgabe gelöst durch ein Werkzeug gemäß Anspruch 1. Es hat sich schon gezeigt, dass ein Werkzeug mit einer Schneide, einem Schälanschnitt und einer Spannut, die einen Linksdrall umfasst und deren zugeordneter Schälanschnitt linksschräg ist oder die einen Rechtsdrall umfasst und deren Schälanschnitt rechtsschräg ist, gute Schnitteigenschaften aufweist. Insbesondere wenn das Werkzeug eine Gewindebohrwerkzeug ist, wird ein Rechtsgewinde bearbeitet, wenn die Spannut einen Linksdrall umfasst und deren zugeordneter Schälanschnitt linksschräg ist, bzw. wird ein Linksgewinde bearbeitet, wenn die Spannut einen Rechtsdrall umfasst und deren zugeordneter Schälanschnitt rechtsschräg ist.

Ein erfindungsgemäßes Werkzeug zeigt gute Standleistungen und hat sich insbesondere als vorteilhaft erwiesen bei der Durchgangslochbearbeitung von Stählen mit höherer Festigkeit und zur Bearbeitung von Durchgangslöchern mit Hochgeschwindigkeit, wobei das Werkzeug um seine Werkzeugachse gedreht wird. Beispielsweise kann das Werkzeug zur Bearbeitung von Vergütungsstählen, Nitrierstählen, Warmarbeitsstählen, gehärteten Stählen, Kaltarbeitsstählen, Einsatzstählen und/oder legierten Stählen, z.B. 42CrMo4V mit einer Zugfestigkeit Rₘ von ca. 1000 N/mm² oder C45 mit einer Zugfestigkeit Rₘ von ca. 600 N/mm², verwendet werden. Bei der Bearbeitung von 42CrMo4V beträgt die Schnittgeschwindigkeit v_{c} ca. 5 bis 50 m/min, bevorzugt 10 m/min, und bei der Bearbeitung von C45 ca. 10 bis 100 m/min, bevorzugt 20 m/min. Das Werkzeug wird also vorzugsweise in einem Schnittgeschwindigkeitsbereich von ca. 5 bis 100 m/min betrieben.

Mittels des Schälanschnitts werden dabei die beim Schneidprozess entstehenden Späne nach vorne aus einem Durchgangsloch ausgebracht. Für sogenannte "verirrte" Späne, die sich nicht wie erwünscht nach vorne, sondern in Richtung des Werkzeugschaftes bewegen, dient die linksgedrallte Spannut zur axialen Spanabfuhr.

Erfindungsgemäß beträgt der Drallwinkel des Linksdralls oder des Rechtsdralls der Spannut zwischen 2° und 15°, vorzugsweise 5° bis 7°, bezogen auf die Werkzeugachse des Werkzeugs.

Erfindungsgemäß beträgt die Schälanschnittschräge des Schälanschnitts zwischen 5° und 20°, vorzugsweise 8° bis 12°, und die Schälanschnittneigung des Schälanschnitts zwischen 3° und 15°, vorzugsweise 8° bis 10°. Die Schälanschnittschräge und die Schälanschnittneigung werden ebenfalls auf die Werkzeugachse des Werkzeugs bezogen angegeben. Die Schälanschnittschräge ist in Bezug auf die Werkzeugachse linksschräg oder rechtsschräg.

Die Schneide des Werkzeugs umfasst eine Umfangsschneide. Der Spanwinkel der Umfangsschneide zum Schälanschnitt bzw. zur Spannut bezogen auf die Tangente an die Schneidkante der Umfangsschneide in Schnittrichtung beträgt zwischen +30° und -5°. Der Spanwinkel kann zwischen unterschiedlichen Ausführungen des Werkzeugs variieren. Nach einer Variante der Erfindung verändert sich der Spanwinkel der Umfangsschneide ausgehend von der Stirnseite am Werkzeugkopf in Richtung auf den Werkzeugschaft. Bei unterschiedlichen Ausführungsformen des Werkzeugs kann der Spanwinkel dabei bezogen auf eine bestimmte Messstelle am Werkzeug variieren. Der Spanwinkel kann sich bei unterschiedlichen Ausführungsformen des Werkzeugs also ausgehend von der Stirnseite am Werkzeugkopf in Richtung auf den Werkzeugschaft unterschiedlich verändern. Bevorzugt verändert sich der Spanwinkel kontinuierlich in dem angegebenen Bereich von +30° und -5° von der Stirnseite des Werkzeugkopfs bis zum Ende des Schälanschnitts, wobei sowohl der Anfangswert als auch der Endwert variabel sind. Der Spanwinkel kann sich also ändern, muss sich aber nicht notwendigerweise ändern. Am Ende des Schälanschnitts weist der Spanwinkel nach einer Variante der Erfindung einen Endwert zwischen +30° und -5°, vorzugsweise zwischen +15° und -5° auf.

Die Länge des Schälanschnitts des Werkzeugs erstreckt sich zwischen ca. einem Fünftel (1/5) bis zu drei Vierteln (3/4) der Länge der Spannut, d. h. würde man die Spannut von der Stirnseite des Werkzeugs bis zu ihrem Ende am Werkzeugkopf messen, so erstreckt sich der Schälanschnitt über ca. ein Fünftel bis zu Dreivierteln der Länge der Spannut ausgehend von der Stirnseite des Werkzeugs, an der der Schälanschnitt beginnt.

Nach Ausführungsformen der Erfindung nimmt der Seelendurchmesser des Werkzeugs, ausgehend von der Stirnseite des Werkzeugkopfs in Richtung auf den Werkzeugschaft zu. Dabei vergrößert sich auch die Querschnittsfläche der Schneide, ausgehend von der Stirnseite des Werkzeugkopfes in Richtung auf den Werkzeugschaft, wobei bevorzugt auch die Zahnbreite der Schneide zunimmt.

Varianten der Erfindung sehen vor, dass das Werkzeug mehrere Schneiden, beispielsweise drei, vier, fünf oder mehr Schneiden aufweist und dass es sich bei dem Werkzeug um ein Gewindebohrwerkzeug handelt, welches ein schraubenlinienförmig verlaufendes Außengewinde umfasst. Das Außengewinde ist dabei an den Schneiden bzw. den Umfangsschneiden der Schneiden angeordnet, welche durch die Schälanschnitte und Spannuten voneinander getrennt sind. Weist das Werkzeug eine Spannut mit einem Linksdrall und einen Schälanschnitt, der linksschräg ist, auf, so ist dieses Werkzeug bevorzugt zur Fertigung von Rechtsgewinden vorgesehen. Weist das Werkzeug hingegen eine Spannut mit einem Rechtsdrall und einen Schälanschnitt, der rechtsschräg ist, auf, so ist diese Werkzeug bevorzugt zur Fertigung von Linksgewinden vorgesehen.

Nach einer Variante der Erfindung sind ausgehend von der Stirnseite des Werkzeugkopfes in einem ersten Bereich des Werkzeugkopfes, dem Anschnitt oder Anschnittbereich, die Gewindegänge des Außengewindes abgeflacht und in einem sich an den ersten Bereich anschließenden zweiten Bereich des Werkzeugkopfes volle Gewindegänge vorhanden, worunter ein Gewindegang ohne Abflachung verstanden wird, der durchaus durch Schälanschnitte oder Spannuten unterbrochen sein kann. Die Abflachung der Gewindegänge in dem ersten Bereich nimmt dabei ausgehend von der Stirnseite des Werkzeugkopfes auf den zweiten Bereich ab.

Nach einer Ausführungsform der Erfindung weist das Werkzeug einen sich an den zweiten Bereich anschließenden dritten Bereich von Gewindegängen des Werkzeugkopfes auf, in dem die Gewindegänge ebenfalls abgeflacht sind. Die Abflachung der Gewindegänge in dem dritten Bereich nimmt dabei ausgehend von dem zweiten Bereich in Richtung auf den Werkzeugschaft zu.

Bevorzugt sind in dem zweiten Bereich zwischen einem und zehn volle Gewindegänge vorhanden. Der zweite Bereich der Gewindegänge beginnt dabei ungefähr im Bereich des Endes des Schälanschnitts, in dem bevorzugt drei bis neun Gewindegänge, die, wie bereits erwähnt, abgeflacht sind, vorhanden sind. Der zweite Bereich schließt sich an den Anschnitt an.

Ein Ausführungsbeispiel der Erfindung ist in den beigefügten schematischen Zeichnungen dargestellt. Es zeigen:
- FIG 1: in einer perspektivischen Darstellung ein Gewindebohrwerkzeug nach der Erfindung,
- FIG 2: in einer perspektivischen Darstellung einen Abschnitt des Gewindebohrwerkzeuges aus FIG 1,
- FIG 3: in einer Seitenansicht einen Abschnitt des Gewindebohrwerkzeuges aus FIG 1,
- FIG 4: in einer geschnittenen Darstellung einen Teil des Gewindebohrwerkzeugs aus FIG 1,
- FIG 5 und FIG 6: Draufsichten auf das Gewindebohrwerkzeug aus FIG 1 und
- FIG 7 bis FIG 10: verschiedene Querschnittsdarstellungen des Gewindebohrwerkzeugs aus FIG 1 gemäß der in FIG 3 eingetragenen Schnittlinien.

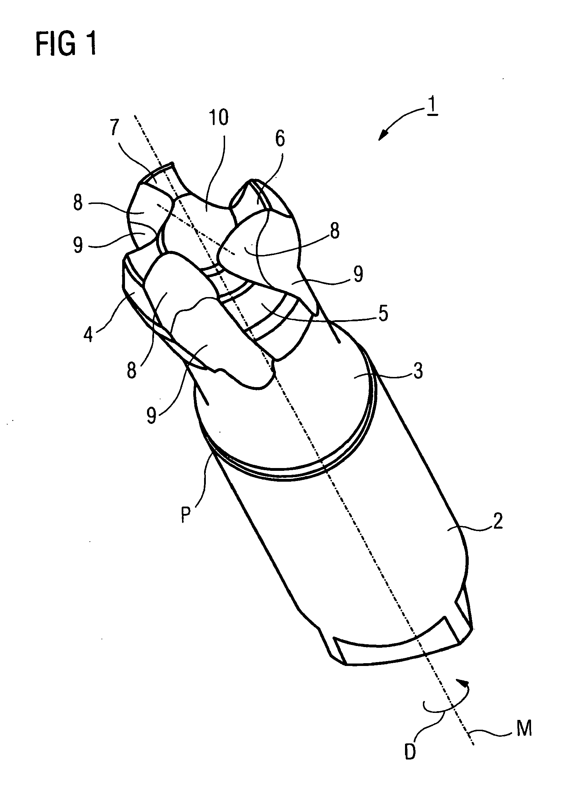

In FIG 1 ist ein erfindungsgemäßes Werkzeug für die spanabhebende Bearbeitung eines Werkstücks dargestellt, bei dem es sich im Falle des vorliegenden Ausführungsbeispiels um ein Gewindebohrwerkzeug 1 handelt. Das Gewindebohrwerkzeug 1 umfasst einen Werkzeugschaft 2 zum Einspannen in eine Werkzeugmaschine und einen Werkzeugkopf 3. Der Werkzeugschaft 2 geht über eine Phase P in den Werkzeugkopf 3 über. Das Gewindebohrwerkzeug 1 umfasst eine Werkzeugachse in Form einer Mittelachse M, um die das Gewindebohrwerkzeug 1 drehbar ist.

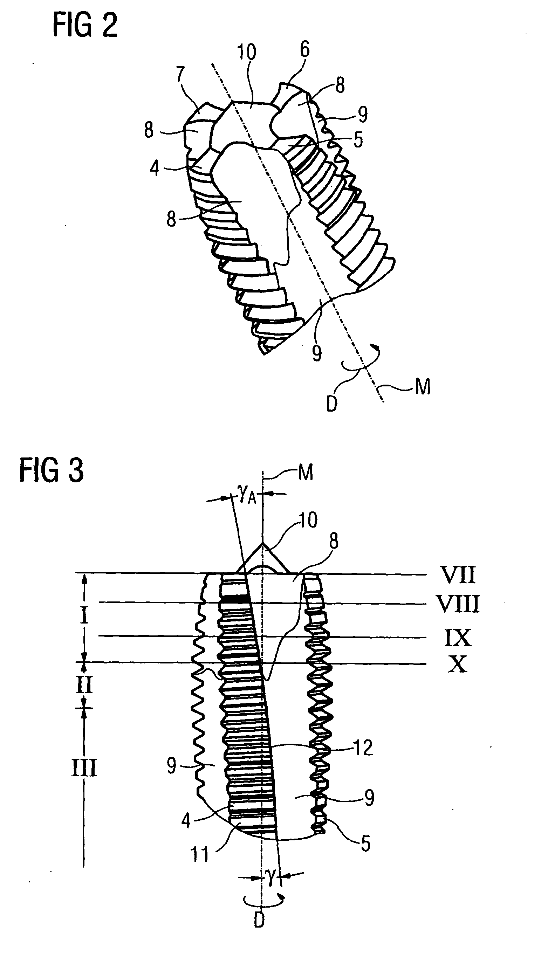

Im Falle des vorliegenden Ausführungsbeispiels sind am Werkzeugkopf 3 des Gewindebohrwerkzeugs 1 vier Schneiden 4 bis 7 um die Mittelachse M angeordnet, die mit einem Außengewinde versehen sind, das in FIG 1 jedoch nicht eingezeichnet ist. Das Außengewinde der Schneiden 4 bis 7, welches sich schraubenlinienförmig verlaufend entlang des Werkzeugkopfes 3 erstreckt, ist in den FIG 2 und 3 zu erkennen, die einen Teil des Werkzeugkopfes 3 des Gewindebohrwerkzeuges 1 aus FIG 1 zeigen. Wie insbesondere den FIG 1 und 2 entnommen werden kann, ist zwischen zwei aufeinanderfolgenden Schneiden der Schneiden 4 bis 7 stirnseitig des Werkzeugkopfes 3 jeweils ein Schälanschnitt 8 und sich an den Schälanschnitt 8 anschließend eine Spannut 9 vorhanden. An der Stirnseite weist das Gewindebohrwerkzeug 1 im Falle des vorliegenden Ausführungsbeispiels im Übrigen eine Zentrierspitze 10 auf.

Das Gewindebohrwerkzeug 1 ist erfindungsgemäß derart ausgebildet, dass die Spannuten 9 bzw. die Schneiden 4 bis 7 einen Linksdrall in Bezug auf die Werkzeugmittelachse M aufweisen. Der Drallwinkel γ einer Spannut 9 ist in FIG 3 exemplarisch eingetragen. Der Drallwinkel γ einer Spannut 9 kann bei dem Gewindebohrwerkzeug 1 zwischen 2° und 15° betragen und wird in Bezug auf die Mittelachse M des Gewindebohrwerkzeugs 1 angegeben. Bevorzugt beträgt der Drallwinkel γ ca. 5° bis 7°. Der Drallwinkel γ ist im Falle des vorliegenden Ausführungsbeispiels bei allen Spannuten 9 gleich gewählt.

Des Weiteren ist das Gewindebohrwerkzeug 1 im Falle des vorliegenden Ausführungsbeispiels derart ausgestaltet, dass die Schälanschnitte 8 jeweils eine Schälanschnittschräge bzw. einen Schälanschnittwinkel γ_{A} zwischen 5° und 20°, bevorzugt ca. 8° bis 12° in Bezug auf die Mittelachse M des Gewindebohrwerkzeugs 1 aufweisen. Die Schälanschnittschräge γ_{A} ist im Falle des vorliegenden Ausführungsbeispiels bei allen Schälanschnitten 8 gleich gewählt und wird ebenfalls in Bezug auf die Mittelachse M des Gewindebohrwerkzeugs 1 angegeben (vgl. FIG 3). Die Schälanschnittschräge ist im Falle des vorliegenden Ausführungsbeispiels linksschräg in Zusammenwirkung mit einer linksgedrallten Spannut 9. Das Gewindebohrwerkzeug ist bevorzugt zur Fertigung von Rechtsgewinden vorgesehen.

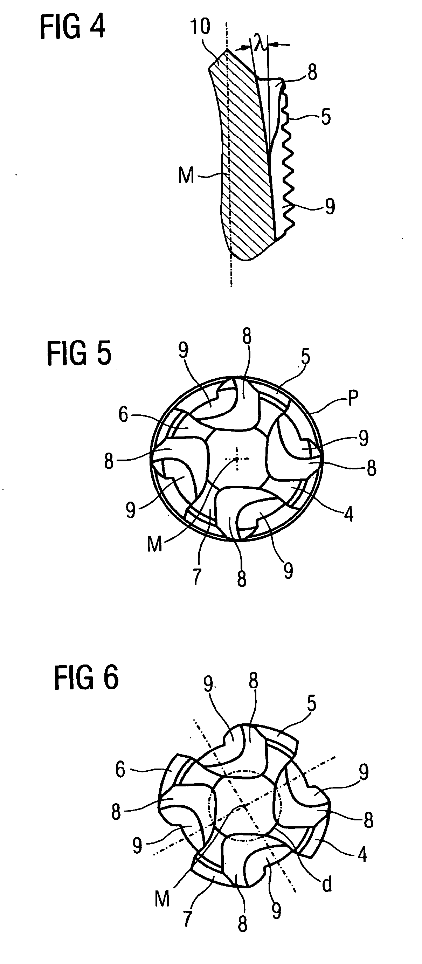

Die Schälanschnittneigung λ eines jeden der Schälanschnitte 8 beträgt zwischen 3° und 15° bezogen auf die Mittelachse M des Gewindebohrwerkzeugs 1. Für einen Ausschnitt eines Schnittes durch das Gewindebohrwerkzeug 1 aus FIG 1 ist die Schälanschnittneigung λ eines Schälanschnitts 8 in Bezug auf die Mittelachse M in FIG 4 exemplarisch dargestellt. Bei der Schälanschnittneigung λ handelt es sich dabei um die Neigung der Seele des Schälanschnitts 8 gegen die Mittelachse M des Gewindebohrwerkzeugs 1, welcher Schälanschnitt 8 in eine Spannut 9 übergeht. Im Falle des vorliegenden Ausführungsbeispiels beträgt die Schälanschnittneigung λ ca. 8° bis 10°.

Bevorzugt erstreckt sich ein Schälanschnitt 8 über ca. ein Fünftel bis zu drei Vierteln der Länge einer Spannut 9, was aus den FIG 1 bis 3 zu erkennen ist.

Das Gewindebohrwerkzeug 1 weist im Falle des vorliegenden Ausführungsbeispiels darüber hinaus längs seines Werkzeugkopfes 3 verschiedene mit dem Außengewinde versehene Schnittbereiche auf, die in FIG 3 eingetragen sind. In dem ersten mit I gekennzeichneten Schnittbereich des Gewindebohrwerkzeugs 1, dem sogenannten Anschnitt, sind ausgehend von der Stirnseite des Werkzeugkopfes 3 die Gewindegänge des Außengewindes abgeflacht, wobei die Abflachung der Gewindegänge in dem ersten Bereich I ausgehend von der Stirnseite des Werkzeugkopfes 3 auf den zweiten Bereich II zu abnimmt. Dadurch ergibt sich eine konische Ausgestaltung des Bereichs I des Gewindebohrwerkzeugs 1. Im Falle des vorliegenden Ausführungsbeispiels weist das Gewindebohrwerkzeug 1 in dem ersten Bereich I, der im Wesentlichen dem Bereich des Schälanschnitts 8 entspricht, sechs Gewindegänge, die mehr oder weniger abgeflacht sind, auf.

An den ersten Bereich I schließt sich ein zweiter Bereich II von Gewindegängen des Außengewindes an, wobei die in dem zweiten Bereich II angeordneten Gewindegänge volle Gewindegänge, also Gewindegänge ohne Abflachung des Außengewindes des Gewindebohrwerkzeugs 1 sind. Im Falle des vorliegenden Ausführungsbeispieles sind im zweiten Bereich II drei volle Gewindegänge des Außengewindes angeordnet. An den zweiten Bereich II schließt sich schließlich ein dritter Bereich III an, in dem ausgehend von dem zweiten Bereich II die Gewindegänge in Richtung auf den Werkzeugschaft 2 des Gewindebohrwerkzeugs 1 zu wieder abgeflacht sind, wobei die Abflachung ausgehend von dem zweiten Bereich II in Richtung auf den Werkzeugschaft 2 zunimmt. Der sich an den dritten Bereich III anschließende Bereich des Werkzeugkopfes 3 ist demnach im maximalen Durchmesser kleiner als der zweite Bereich II im maximalen Durchmesser.

Wie insbesondere den Figuren 1 bis 3 entnommen werden kann, sind die Gewindegänge des Werkzeugkopfes 3 durch die Schälanschnitte 8 und Spannuten 9 unterbrochen.

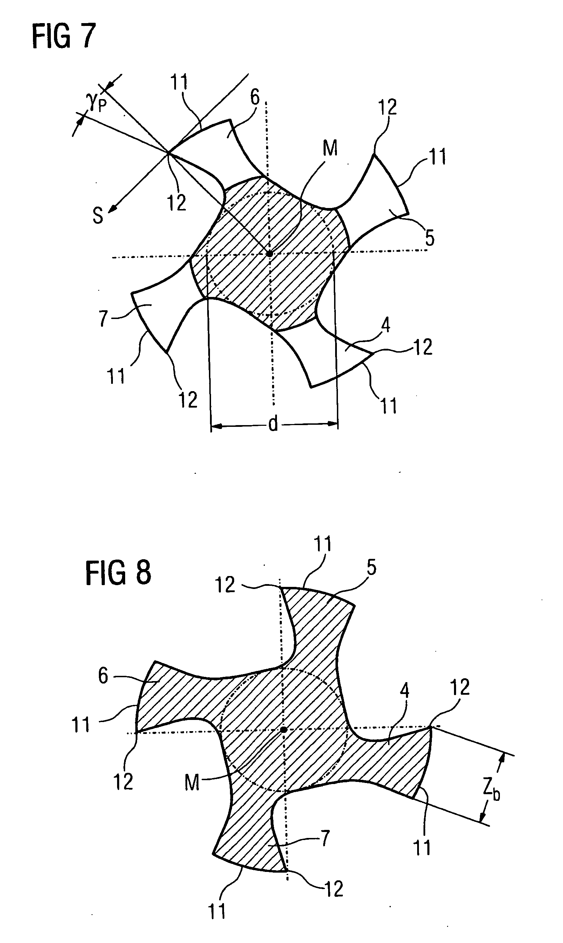

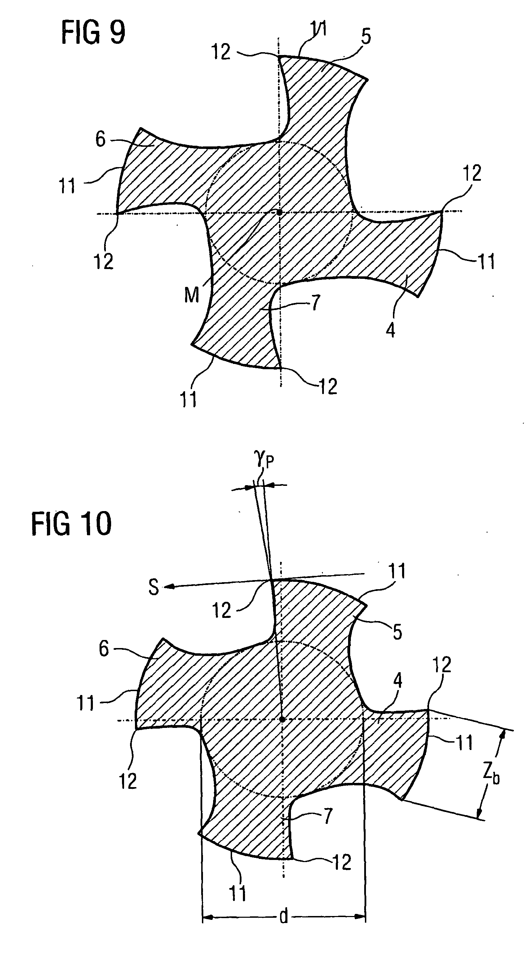

Zur Erläuterung des Aufbaus des Gewindebohrwerkzeugs 1 sind in FIG 3 des Weiteren vier Schnitte VII bis X eingetragen, deren Schnittansichten in den FIG 7 bis 10 dargestellt sind. Den Schnittansichten VII bis X kann zum einen entnommen werden, dass sich im Falle des vorliegenden Ausführungsbeispiels bei dem Gewindebohrwerkzeug 1 der Spanwinkel γ_{P} der Umfangsschneiden 11 der Schneiden 4 bis 7 ausgehend von der Stirnseite am Werkzeugkopf 3 in Richtung auf den Werkzeugschaft 2 bevorzugt kontinuierlich verändert. Der Spanwinkel γ_{P} ist dabei an allen Umfangsschneiden 11 der Schneiden 4 bis 7 in einem Querschnitt ungefähr gleich. Der Spanwinkel γ_{P}, welcher jeweils bezüglich einer Umfangsschneidkante 12 bzw. einer Tangente in Schnittrichtung S an die Umfangsschneidkante 12 einer der Umfangsschneiden 11 der Schneiden 4 bis 7 angegeben wird, kann sich ausgehend von der Stirnseite des Werkzeugkopfes 3, was in FIG 7 dargestellt ist, von +30° bis zu -5° am Ende eines Schälanschnitts 8 verändern. Diese letzte Ausgestaltung des Spanwinkels γ_{P} ist in den Figuren aber nicht dargestellt. In FIG 10 ist für das vorliegenden Ausführungsbeispiel ein letzter kleiner positiver Spanwinkel γ_{P} exemplarisch an der Umfangsschneidkante 12 der Schneide 5 eingetragen.

Wie aus den FIG 7 bis 10 zu erkennen, vergrößert sich der Seelendurchmesser d des Gewindebohrwerkzeugs 1 ausgehend von der Stirnseite des Werkzeugkopfes 3 in Richtung auf den Werkzeugschaft 2. Dies ist sowohl aus FIG 7, in welcher der aktuelle Seelendurchmesser d und mit einem vergrö-ßerten Kreis angedeutet der zunehmende Seelendurchmesser d eingetragen ist, zu erkennen sowie aus den FIG 8 bis 10 als auch aus FIG 6, welche eine Draufsicht auf das Gewindebohrwerkzeug 1 zeigt.

Ausgehend von der Stirnseite des Werkzeugkopfes 3 in Richtung auf den Werkzeugschaft 2 vergrößert sich auch jeweils die Querschnittsfläche einer jeden Schneide 4 bis 7, wobei zusätzlich die Schneidenbreite bzw. Zahnbreite Z_{b} einer jeden Schneide 4 bis 7 zunimmt. In den FIG 8 und FIG 10 ist exemplarisch die Zahnbreite Z_{b} für die Schneide 4 eingetragen. Die Querschnittsflächen der Schneiden 4 bis 7 und die Zahnbreiten Z_{b} der Schneiden 4 bis 7 sind dabei für allen Schneiden 4 bis 7 in einem Querschnitt ungefähr gleich.

Die vorstehend beschriebene Ausgestaltung des Gewindebohrwerkzeugs 1 ist auch aus den Draufsichten, wie sie in den FIG 5 und 6 dargestellt sind, erkennbar, wobei zusätzlich in FIG 5 das Außengewinde der Schneiden 4 bis 7 zeichnerisch dargestellt ist, worauf in FIG 6 im Vergleich zu FIG 5 verzichtet wurde.

Das vorstehend beschriebene Gewindebohrwerkzeug 1 eignet sich aufgrund seines Aufbaus besonders für die Bearbeitung von Durchgangslöchern von Stählen mit höherer Festigkeit bzw. zur Bearbeitung von Durchgangslöchern mit Hochgeschwindigkeit. Dabei werden die durch die Gewindegänge des Außengewindes des Gewindebohrwerkzeugs 1 bei der Bearbeitung eines Durchgangsloches entstehenden Späne nach vorne, d. h. aus dem Durchgangsloch heraus ausgebracht. Für "verirrte" Späne, also Späne, die sich nicht nach vorne bewegen, sind die mit einem Linksdrall versehenen Spannuten 9 zur Abführung der Späne vorgesehen.

Der vorstehend beschriebene Aufbau eines erfindungsgemäßen Werkzeugs, insbesondere eines erfindungsgemäßen Gewindebohrwerkzeugs ist nur exemplarisch zu verstehen und kann im Rahmen der Erfindung auch anders ausgeführt sein. So kann das Gewindebohrwerkzeug weniger als vier Schneiden, aber auch mehr als vier Schneiden aufweisen. Insbesondere kann das Gewindebohrwerkzeug drei oder fünf Schneiden aufweisen. Die Schneiden können mit gleicher oder mit ungleicher Teilung um die Mittelachse M angeordnet sein. Die Angaben des Drallwinkels der Spannuten, der Schälanschnittschrägen und der Spanwinkel beziehen sich dabei auf die jeweilige Umfangsschneidkante einer Schneide, wobei alle Schneiden im Wesentlichen gleich ausgestaltet sind.

Im Unterschied zu dem beschriebenen Ausführungsbeispiel kann das Werkzeug auch eine oder mehrere Spannuten mit einem Rechtsdrall aufweisen, der ein Schälanschnitt bzw. denen Schälanschnitte zugeordnet sind, der rechtsschräg bzw. die rechtsschräg ausgebildet sind. Ein derart ausgebildetes Gewindebohrwerkzeug ist bevorzugt zur Fertigung von Linksgewinden vorgesehen.

Im Übrigen sind andere Winkeleinstellungen, beispielsweise für den Drallwinkel, die Schälanschnittschräge, die Schälanschnittneigung und/oder den Spanwinkel als vorstehend im Zusammenhang mit dem vorliegenden Ausführungsbeispiels beschrieben im Rahmen der Erfindung wählbar.

Gleiches gilt für die Anzahl der Gewindegänge in den Bereichen I bis III sowie für die Wahl der Länge des Schälanschnitts. Das Gewindebohrwerkzeug muss auch nicht notwendigerweise, wie vorstehend beschrieben, drei derartige Bereiche I bis III aufweisen.

Die Bemaßung des Gewindebohrwerkzeugs an sich wird dabei jeweils in Abhängigkeit von dem zu bearbeitenden Werkstücken bzw. den zu bearbeitenden Durchgangsbohrlöchern gewählt. Bevorzugt betragen die Gewindeprofilwinkel dabei zwischen 50° und 70° und die Gewindeflankenwinkel zwischen 25° und 35°.

### Bezugszeichenliste

- 1: Gewindebohrwerkzeug
- 2: Werkzeugschaft
- 3: Werkzeugkopf
- 4 bis 7: Schneiden
- 8: Schälanschnitt
- 9: Spannut
- 10: Zentrierspitze
- 11: Umfangsschneide
- 12: Umfangsschneidkante

- γ: Drallwinkel
- γ_{A}: Schälanschnittschräge
- λ: Schälanschnittneigung
- γ_{P}: Spanwinkel
- d: Seelendurchmesser
- Z_{b}: Zahnbreite
- M: Mittelachse
- S: Schnittrichtung
- P: Phase
- D: Drehrichtung
- I bis III: Bereiche
- VII bis X: Schnitte

## Patentansprüche

1. Werkzeug für die Bearbeitung eines Werkstücks, welches Werkzeug um eine Werkzeugachse (M) drehbar ist, aufweisend einen Werkzeugschaft (2) und einen Werkzeugkopf (3),
welcher Werkzeugkopf (3) wenigstens eine Schneide (4 bis 7), wenigstens einen der Schneide (4 bis 7) zugeordneten Schälanschnitt (8) und wenigstens eine der Schneide (4 bis 7) zugeordnete Spannut (9) umfasst,
wobei die Spannut (9) einen Linksdrall aufweist und der Schälanschnitt (8) linksschräg ist oder wobei die Spannut (9) einen Rechtsdrall aufweist und der Schälanschnitt (8) rechtsschräg ist, **dadurch gekennzeichnet, dass** der Drallwinkel (γ) des Linksdralls oder des Rechtsdralls der Spannut (9) zwischen 2° und 15° beträgt,
dass der Schälanschnitt (8) eine Schälanschnittschräge (γ_{A}) zwischen 5° und 20° linksschräg oder rechtsschräg aufweist und dass der Schälanschnitt (8) eine Schälanschnittneigung (λ) zwischen 3° und 15° aufweist.

2. Werkzeug nach Anspruch 1, bei dem die Schneide (4 bis 7) eine Umfangsschneide (11) umfasst, welche einen Spanwinkel (γₚ) aufweist, welcher zwischen +30° und -5° beträgt und/oder welcher sich ausgehend von der Stirnseite am Werkzeugkopf (3) in Richtung auf den Werkzeugschaft (2), vorzugsweise kontinuierlich, verändert.

3. Werkzeug nach Anspruch 2, bei dem der Spanwinkel (γₚ) am Ende des Schälanschnitts (8) zwischen +30° und -5° beträgt.

4. Werkzeug nach einem der Ansprüche 1 bis 3, bei dem sich der Schälanschnitt (8) zwischen ca. einem Fünftel (1/5) bis zu drei Vierteln (3/4) der Länge der Spannut (9) erstreckt
und/oder bei dem der Seelendurchmesser (d) ausgehend von der Stirnseite des Werkzeugkopfes (3) in Richtung auf den Werkzeugschaft (2) zunimmt
und/oder bei dem sich die Querschnittsfläche der Schneide (4 bis 7) ausgehend von der Stirnseite des Werkzeugkopfes (3) in Richtung auf den Werkzeugschaft (2) vergrößert.

5. Werkzeug nach einem der Ansprüche 1 bis 4, welches mehrere Schneiden (4 bis 7) aufweist und/oder welches ein Gewindebohrwerkzeug (1) ist und vorzugsweise ein schraubenlinienförmig verlaufendes Außengewinde aufweist.

6. Werkzeug nach Anspruch 5, bei dem ausgehend von der Stirnseite des Werkzeugkopfes (3) in einem ersten Bereich (I) die Gewindegänge des Außengewindes abgeflacht sind und in einem sich an den ersten Bereich (I) anschließenden zweiten Bereiche (II) volle Gewindegänge vorhanden sind, wobei vorzugsweise die Abflachung der Gewindegänge in dem ersten Bereich (I) ausgehend von der Stirnseite des Werkzeugkopfes (3) auf den zweiten Bereich (II) abnimmt.

7. Werkzeug nach Anspruch 6, welches einen sich an den zweiten Bereich (II) anschließenden dritten Bereich (III) von Gewindegängen aufweist, in dem die Gewindegänge abgeflacht sind, wobei vorzugsweise die Abflachung der Gewindegänge in dem dritten Bereich (III) ausgehend von dem zweiten Bereich (II) in Richtung auf den Werkzeugschaft (2) zunimmt.

8. Werkzeug nach Anspruch 6 oder Anspruch 7, bei dem in dem zweiten Bereich (II) zwischen einem und zehn volle Gewindegänge vorhanden sind und/oder bei dem im Bereich des Endes des Schälanschnitts (8) der zweite Bereich (II) der Gewindegänge beginnt
und/oder bei dem im Bereich des Schälanschnitts (8) drei bis neun Gewindegänge vorhanden sind.

## Claims

1. Tool for machining a workpiece, said tool being rotatable about a tool axis (M), having a tool shaft (2) and a tool head (3), said tool head (3) comprising at least one cutting edge (4 to 7), at least one spiral point (8) assigned to the cutting edge (4 to 7) and at least one chip flute (9) assigned to the cutting edge (4 to 7),
wherein the chip flute (9) has a left-hand helix and the spiral point (8) is skewed to the left or wherein the chip flute (9) has a right-hand helix and the spiral point (8) is skewed to the right,
**characterized in that**
the helix angle (γ) of the left-hand helix or of the right-hand helix of the chip flute (9) is between 2° and 15°,
the spiral point (8) has a spiral point bevel (γ_{A}) between 5° and 20° skewed to the left or skewed to the right and
the spiral point (8) has a spiral point bevel (λ) between 3° and 15°.

2. Tool according to claim 1, in which the cutting edge (4 to 7) comprises a peripheral cutting edge (11) which has a rake angle (γₚ) that is between +30° and -5° and/or which changes, preferably continuously, starting from the face end on the tool head (3) in the direction of the tool shaft (2).

3. Tool according to claim 2, in which the rake angle (γₚ) at the end of the spiral point (8) is between +30° and -5°.

4. Tool according to one of claims 1 to 3, in which the spiral point (8) extends between approx. one fifth (1/5) to three quarters (3/4) of the length of the chip flute (9) and/or in which the core diameter (d) increases starting from the face end of the tool head (3) in the direction of the tool shaft (2)
and/or in which the cross-sectional area of the cutting edge (4 to 7) enlarges starting from the face end of the tool head (3) in the direction of the tool shaft (2).

5. Tool according to one of claims 1 to 4, which has a plurality of cutting edges (4 to 7) and/or which is a thread tapping tool (1) and preferably has an external thread running helically.

6. Tool according to claim 5, in which the threads of the external thread are flattened in a first region (I) starting from the face end of the tool head (3) and in a second region (II) adjoining the first region (I) full threads are present, wherein the flattening of the threads in the first region (I) preferably diminishes starting from the face end of the tool head (3) towards the second region (II).

7. Tool according to claim 6 having a third region (III) of threads adjoining the second region (II) in which the threads are flattened wherein the flattening of the threads in the third region (III) preferably increases starting from the second region (II) in the direction of the tool shaft (2).

8. Tool according to claim 6 or claim 7, in which between one and ten full threads are present in the second region (II) and/or in which the second region (II) of threads begins in the region of the end of the spiral point (8) and/or in which three to nine threads are present in the region of the spiral point (8).

## Revendications

1. Outil pour l'usinage d'une pièce, lequel outil est apte à tourner autour d'un axe d'outil (M) et comporte une tige (2) et une tête (3), laquelle tête (3) comporte au moins une arête de coupe (4 à 7), au moins un angle d'entrée hélicoïdale (8) associé à l'une des arêtes de coupe (4 à 7), et au moins une goujure (9) associée à l'une des arêtes de coupe (4 à 7),
ladite goujure (9) présentant une torsion à gauche et l'angle d'entrée hélicoïdale (8) présentant une obliquité vers la gauche ou ladite goujure (9) présentant une torsion à droite et l'angle d'entrée hélicoïdale (8) présentant une obliquité vers la droite,
**caractérisé**
**en ce que** l'angle (γ) de la torsion à gauche ou de la torsion à droite de la goujure (9) mesure entre 2° et 15°,
**en ce que** l'angle d'entrée hélicoïdale (8) présente une obliquité (γ_{A}) entre 5° et 20° vers la gauche ou vers la droite, et
**en ce que** l'angle d'entrée hélicoïdale (8) présente une inclinaison (λ) entre 3° et 15°.

2. Outil selon la revendication 1, dans lequel l'arête de coupe (4 à 7) comporte un tranchant périphérique (11) qui présente un angle de coupe (γₚ) qui mesure entre +30° et -5° et/ou qui varie, de préférence en continu, à partir de la face frontale au niveau de la tête (30) de l'outil vers la tige (2) de l'outil.

3. Outil selon la revendication 2, dans lequel l'angle de coupe (γₚ) à l'extrémité de l'angle d'entrée hélicoïdale (8) mesure entre +30° et -5°.

4. Outil selon l'une quelconque des revendications 1 à 3, dans lequel l'angle d'entrée hélicoïdale (8) s'étend entre environ un cinquième (1/5) jusqu'aux trois quarts (3/4) de la longueur de la goujure (9), et/ou dans lequel le diamètre de l'âme (d) augmente à partir de la face frontale de la tête (3) de l'outil vers la tige (2) de l'outil, et/ou dans lequel la surface de la section de l'arête de coupe (4 à 7) s'agrandit à partir de la face frontale de la tête (3) de l'outil vers la tige (2) de l'outil.

5. Outil selon l'une quelconque des revendications 1 à 4, lequel comporte plusieurs arêtes de coupe (4 à 7) et/ou lequel est un taraud (1) et comporte de préférence un filetage extérieur en forme d'hélice.

6. Outil selon la revendication 5, dans lequel dans une première zone (I) partant de la face frontale de la tête (3) de l'outil, les pas du filetage extérieur sont aplatis et dans une deuxième zone (II), adjacente à la première zone (I), les pas de vis sont pleins, sachant que, de préférence, l'aplatissement des pas de vis dans la première zone (I) diminue à partir de la face frontale de la tête (3) de l'outil vers la deuxième zone (II).

7. Outil selon la revendication 6, lequel comporte une troisième zone (III) de pas de vis, adjacente à la deuxième zone (II), dans laquelle les pas de vis sont aplatis, sachant que de préférence l'aplatissement des pas de vis dans la troisième zone (III) augmente à partir de la deuxième zone (II) vers la tige (2) de l'outil.

8. Outil selon la revendication 6 ou la revendication 7, dans lequel dans la deuxième zone (II) sont prévus entre un et dix pas de vis pleins et/ou dans lequel dans la zone de l'extrémité de l'angle d'entrée hélicoïdale (8) commence la deuxième zone (II) de pas de vis, et/ou dans lequel dans la zone de l'angle d'entrée hélicoïdale (8) sont prévus trois à neuf pas de vis.
